# EUROPEAN PATENT APPLICATION

(11) **EP 1 956 213 A1**
(43) Date of publication of application: **13.08.2008**
(21) Application number: 06847060.8
(22) Date of filing: 22.11.2006
(51) Int. Cl.: F02B 37/04, F02B 37/00, F02B 21/00

(54) **SYSTEM FOR PROVIDING SUPERCHARGING ASSISTANCE UNDER TRANSITORY OPERATING CONDITIONS FOR RECIPROCATING ENGINES SUPERCHARGED USING A TURBOCHARGER UNIT**

(30) Priority: 23.11.2005 ES 200502875
(71) Applicant: ROS ROCA INDOX EQUIPOS E INGENIERIA, S.L., 25300 Tarrega (ES)
(72) Inventor: CALLEJON AGRAMUNT, Ismael, E-25300 Tarrega (Lleida) (ES); MORENO EGUILAZ, José Manuel, E-25300 Tarrega (Lleida) (ES); GEA TURRIELLA, Josep, E-25300 Tarrega (Lleida) (ES); ARTIGAS GOMEZ, Teodoro, E-25300 Tarrega (Lleida) (ES); GIRIBET CARLI, Josep, E-25300 Tarrega (Lleida) (ES)
(74) Representative: Aragones Forner, Rafael Angel
(86) International application number: PCT/ES2006/000646
(87) International publication number: WO 2007/060274

(57) **Abstract**

The invention relates to a system for providing supercharging assistance under transitory operating condition for reciprocating engines supercharged using a turbocharger unit. The inventive system comprises an air tank which is external to the engine and which is connected to the engine intake manifold and air compressor which is connected to the air tank in which pressurised air collects, said pressurised air being released to the intake manifold according too the operating conditions of the vehicle.

## Description

A system for providing supercharging assistance under transitory operating conditions for reciprocating engines being supercharged by means of a turbosupercharger unit.

### OBJECT OF THE INVENTION

The present invention has as its object a system for providing supercharging assistance under transitory operating conditions for reciprocating engines being supercharged by means of a turbosupercharger unit.

### FIELD OF THE INVENTION

The system of the present invention relates to the reciprocating internal combustion engines both of the diesel cycle and of the Otto cycle type being supercharged by means of turbosupercharger units and submitted to a use wherein the transitory operating conditions are of high relevance, specially in the supercharged traction engines for vehicles.

### BACKGROUND OF THE INVENTION

The engines being supercharged by means of a turbosupercharger offer a performance that depends on the design of the turbosupercharger unit, wherein in the low engine exhaust gas flow rate areas the work being tapped by the turbine is not enough to achieve an adequate rate of rotation for the compressor to bring about a correct discharge pressure for the operation of the engine.

This fact entails that the engine's performances in transitory load (engine torque) situations, i.e. when going from a low-load to a high-load condition, specially in the recoveries in long gear running conditions with the vehicle, are not the adequate ones.

At the user's level these problems result in a waiting time till the engine's performances are the adequate ones, during which time and especially in the diesel engines a transient is brought about wherein the polluting emissions are very substantial.

The aforementioned drawbacks at present tend to be solved by incorporating turbosuperchargers with adjustable-blade turbine or by means of the incorporation of two turbosuperchargers, one of which is of a smaller size for low flow rate conditions whereas the other one is for the usual steady state operating conditions of the engine.

These are very valid approaches that nevertheless entail an increase in the cost of the final product and a substantial increase in its complexity, the reliability of the whole assembly being thus jeopardised.

### SUMMARY OF THE INVENTION

The present invention obviates the aforementioned drawbacks by allowing to globally improve the supercharging system while using a traditional turbosupercharger.

The system being designed for providing supercharging assistance under transitory operating conditions for reciprocating engines of the type of those that are supercharged by means of a turbosupercharger unit and being the object of the present invention is essentially characterised in that it comprises an air tank being external to the engine and through a control valve connected to the intake manifold of the engine, and an air compressor being through control means connected to the air tank in which the pressurised air from the compressor collects and is thereupon released to the intake manifold according to the operating conditions of the vehicle.

According to the present invention, the air compressor can be the actual compressor of the turbosupercharger unit of the engine supercharging system, or else it can be a compressor being driven by the engine in a separate manner as regards the intake system, or else it can be an externally driven compressor as regards the engine, and as the case might be it could have its function shared by devices being external to the engine.

According to the invention, the intake air tank has its function shared by devices being external to the engine.

According to the present invention, the control valve allows the air release from the air tank to the intake manifold as a function of the operating conditions of the engine and/or the vehicle and/or of the performances being demanded by the user.

According to the invention, the control means allow the filling of the air tank with pressurised air from the air compressor as a function of the operating conditions of the engine and/or the vehicle and/or of the performances being demanded by the user.

These and other characterising features will be best made apparent by the following detailed description whose understanding will be made easier by the accompanying two sheets of drawings showing some practical embodiments being cited only by way of examples not limiting the scope of the present invention.

### DESCRIPTION OF THE DRAWINGS

In the drawings:
Fig. 1 is a diagrammatic view of the system for providing supercharging assistance under transitory operating conditions for reciprocating engines being supercharged by means of a turbosupercharger unit, as per the present invention.
Fig. 2 is a diagrammatic view being similar to Fig. 1, wherein the compressor is the actual compressor of the turbosupercharger unit.
Fig. 3 is a diagrammatic view being similar to Fig. 1, wherein the compressor is mechanically driven by the engine.
Fig. 4 is a diagrammatic view being similar to Fig. 3, wherein the compressor is mechanically driven by the engine and wherein the air tank provides assistance to other elements of the vehicle.
Fig. 5 is a diagrammatic view being similar to Fig. 3, wherein the compressor is driven by the engine and wherein the compressor provides assistance to other elements of the vehicle, the compressor carrying out said assistance in an indirect manner through the control means.
Fig. 6 is a diagrammatic view being similar to Fig. 3, wherein the compressor is driven by the engine and wherein the compressor and the air tank provide assistance to other elements of the vehicle, the compressor carrying out said assistance in a direct manner through the control means.

### DETAILED DESCRIPTION OF A PREFERRED EMBODIMENT

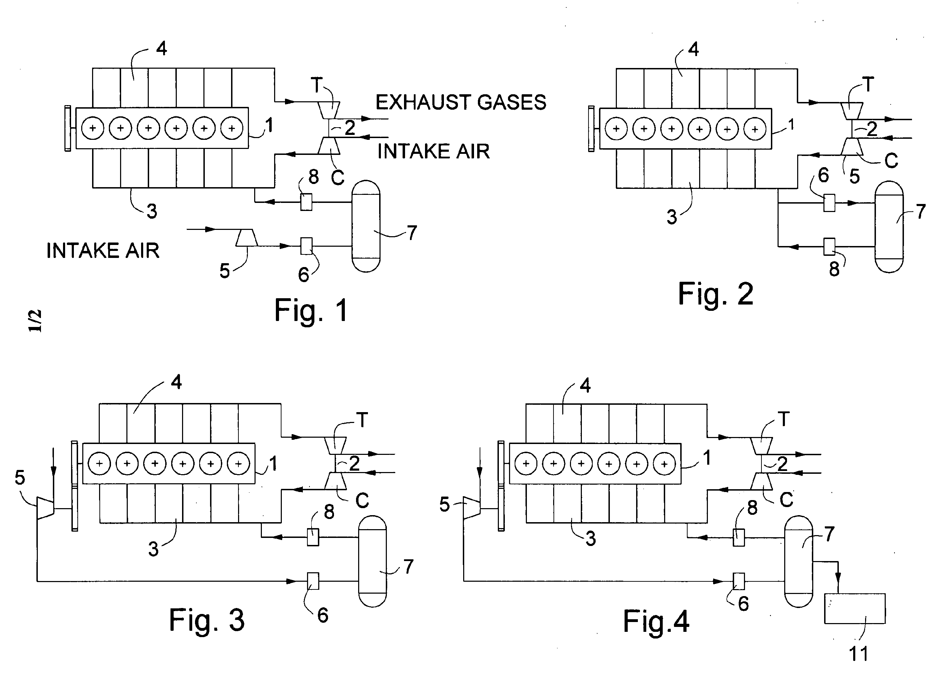

According to the drawings Fig. 1 illustrates the preferential configuration of the preferred embodiment of the invention. Said preferred embodiment comprises the reciprocating engine -1- being supercharged by means of a turbosupercharger -2-, in such a way that from the exhaust gas flow from the exhaust manifold -4- the turbine -T- taps work allowing to drive the compressor - C-, this latter in its turn sending pressurised air to the intake manifold -3-. The invention incorporates on said reciprocating engine -1- an external compressor -5-being through control means -6- connected to an external air tank -7- being in its turn connected to the intake manifold -3- through a control valve -8-. The operation of the system is based on the filling of the external air tank -7- by means of the control means -6- connecting it to the compressor -5- in order that when thus required in the transitory situations the control valve -8- allows the release of air from the air tank -7- to the intake manifold -3- of the engine, so as to thus increase the air quantity being sucked up by the engine.

Fig. 2 illustrates another configuration of the system as per another preferred embodiment, wherein the compressor -5- is the actual compressor of the turbosupercharger unit -2- of the engine -1-, said compressor being connected through the control means -6-to the external air tank -7-. In this configuration the filling of the external air tank -7- is carried out in those conditions in which the compressor -5- of the turbosupercharger unit -2- introduces an excessive air into the intake manifold -3- of the engine.

Fig. 3 illustrates another configuration of the system wherein the compressor -5- is directly driven by the engine -1- itself, said compressor -5- being connected through control means -6- to the external air tank -7-.

In another configuration of the system such as that being illustrated in Fig. 4 the compressor -5- besides being directly driven by the engine -1- itself is also connected through the control means -6- to the external air tank -7- and the external air tank -7- is in its turn connected by means of the control valve -8- to the intake manifold -3- and at the same time to other elements -11-of the vehicle having a demand of pressurised air.

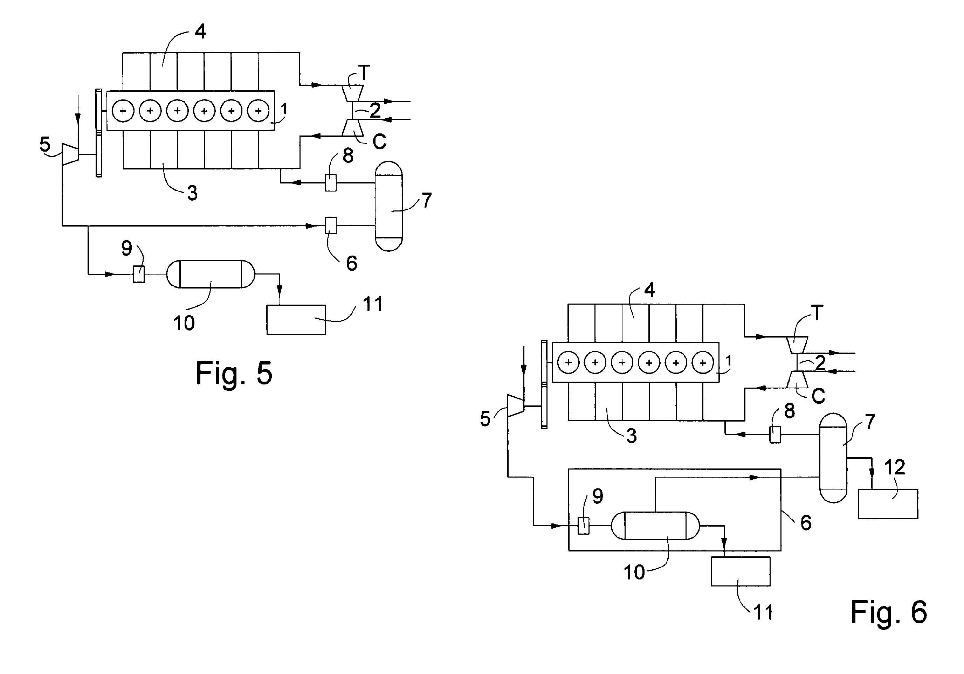

Fig. 5 illustrates an embodiment being similar to that being illustrated in Fig. 3, wherein the compressor -5- besides being directly driven by the engine -1- is connected to the external air tank -7- through the control means -6- and assists an air tank -10- through regulating elements -9- and thus allows the operation of other elements -11- of the vehicle.

Fig. 6 illustrates a more extensive configuration wherein the compressor -5- besides being directly driven by the engine -1- itself is connected to the external air tank -7- through control means -6- in this case comprising their own regulating elements -9- of the vehicle and an air tank -10- both feeding the external air tank -7- with pressurised air and allowing the operation of other elements -11- of the vehicle. At the same time the external air tank -7- itself can supply other elements -12- of the vehicle with air, and at the same time and through the control means -8- it can release pressurised air into the intake manifold -3-.

## Claims

1. A system for providing supercharging assistance under transitory operating conditions for reciprocating engines being supercharged by means of a turbosupercharger unit, of the type wherein the supercharging of the engine (1) is carried out by at least one turbosupercharger unit (2) implying a delay before reaching the steady state pressure in the manifold (3) during the engine (1) acceleration transient; **characterised in that** it comprises an air tank (7) being external to the engine (1) and through a control valve (8) connected to the intake manifold (3) of the engine (1), and an air compressor (5) being through control means (6) connected to the air tank (7) in which the pressurised air from the compressor (5) collects and is thereupon released to the intake manifold (3) according to the operating conditions of the vehicle.

2. A system as per claim 1, **characterised in that** the air compressor (5) is the actual compressor (C) of the turbosupercharger unit (2) of the engine (1) supercharging system.

3. A system as per claim 1, **characterised in that** the air compressor (5) is a compressor (5) being driven by the engine (1) in a separate manner as regards the intake system.

4. A system as per claims 1 and 3, **characterised in that** the air compressor (5) has its function shared by devices (11, 12) being external to the engine (1).

5. A system as per claim 1, **characterised in that** the intake air tank (7) has its function shared by devices (11) being external to the engine (1).

6. A system as per claim 1, **characterised in that** the control valve (8) allows the air release from the air tank (7) to the intake manifold (3) as a function of the operating conditions of the engine (1) and/or the vehicle and/or of the performances being demanded by the user.

7. A system as per claim 1, **characterised in that** the control means (8) allow the filling of the air tank (7) with pressurised air from the air compressor (5) as a function of the operating conditions of the engine (1) and/or the vehicle and/or of the performances being demanded by the user.
